# EUROPEAN PATENT SPECIFICATION

(11) **EP 4 254 895 B1**
(45) Date of publication and mention of the grant of the patent: **22.10.2025**
(21) Application number: 22164664.9
(22) Date of filing: 28.03.2022
(51) Int. Cl.: H04L 41/16, G06N 3/02, H04L 41/022, G06N 20/00, H04W 24/02

(54) **COMMUNICATION NETWORK ARRANGEMENT AND METHOD FOR PROVIDING A MACHINE LEARNING MODEL FOR PERFORMING COMMUNICATION NETWORK ANALYTICS**
KOMMUNIKATIONSNETZWERKANORDNUNG UND VERFAHREN ZUR BEREITSTELLUNG EINES MASCHINENLERNMODELLS ZUR DURCHFÜHRUNG VON KOMMUNIKATIONSNETZWERKANALYSEN
AGENCEMENT DE RÉSEAU DE COMMUNICATION ET PROCÉDÉ POUR LA FOURNITURE D'UN MODÈLE D'APPRENTISSAGE PAR MACHINE PERMETTANT D'EFFECTUER UNE ANALYSE DE RÉSEAU DE COMMUNICATION

(43) Date of publication of application: 04.10.2023
(73) Proprietor: NTT DOCOMO, INC., Chiyoda-Ku Tokyo 100-6150 (JP)
(72) Inventor: SAMA, Malla Reddy, 80687 Munich (DE); THAKOLSRI, Srisakul, 80687 Munich (DE); MINOKUCHI, Atsushi, Tokyo, 100-6150 (JP)
(74) Representative: Viering, Jentschura & Partner mbB Patent- und Rechtsanwälte

(56) References cited:
- WO-A1-2020/200487
- NOKIA ET AL: "NWDAF discovery update to support model sharing among trusted vendors", vol. SA WG2, no. e-meeting; 20210517 - 20210528, 10 May 2021 (2021-05-10), XP052005044, Retrieved from the Internet <URL:https://ftp.3gpp.org/tsg_sa/WG2_Arch/TSGS2_145E_Electronic_2021-05/Docs/S2-2104752.zip S2-2104752-trusted-vendor-23288.docx> [retrieved on 20210510]
- "3rd Generation Partnership Project; Technical Specification Group Services and System Aspects; Study of Enablers for Network Automation for 5G 5G System (5GS); Phase 3 (Release 18)", 7 March 2022 (2022-03-07), XP052126017, Retrieved from the Internet <URL:https://ftp.3gpp.org/tsg_sa/WG2_Arch/Latest_SA2_Specs/Latest_draft_S2_Specs/23700-81-010.zip Draft_TR23.700-81v010_rm.doc> [retrieved on 20220307]
- "3rd Generation Partnership Project; Technical Specification Group Services and System Aspects; Architecture enhancements for 5G System (5GS) to support network data analytics services (Release 17)", 9 March 2022 (2022-03-09), XP052127775, Retrieved from the Internet <URL:https://ftp.3gpp.org/tsg_sa/WG2_Arch/Latest_SA2_Specs/DRAFT_INTERIM/23288-h40_CRs_Implemented.zip 23288-h40_CRs_Implemented.docx> [retrieved on 20220309]
- NTT DOCOMO: "Solution for ML model sharing with different service provider's AnLF", vol. SA WG2, no. e-meeting; 20220406 - 20220412, 29 March 2022 (2022-03-29), XP052133305, Retrieved from the Internet <URL:https://ftp.3gpp.org/tsg_sa/WG2_Arch/TSGS2_150E_Electronic_2022-04/Docs/S2-2202468.zip S2-2202468_eNA_solution_multivendor_r2.docx> [retrieved on 20220329]

## Description

The present disclosure relates to an arrangement of communication network components and a method for providing a machine learning model for performing communication network analytics.

In a communication network such as a 5G mobile communication network it is important to ensure that a certain service quality can be maintained. For this, network statistical analysis and prediction information which may be generated from information like load, resource usage, available components, state of components etc. may be monitored to be able to take measures, e.g. when overload is imminent, to avoid a drop of service quality, etc. In a communication network having a network slice architecture, like a 5G mobile communication system, this relates in particular to monitoring of network analysis and prediction information (also referred to as network analytics information) for individual network slice instances since, for example, individual network slice instances may become overloaded. Accordingly, efficient and reliable approaches to provide network analysis and/or prediction information are desirable.

WO 2020/200487 A1 discloses a process of discovery of machine learning (ML) models and ML model providers by ML model consumers.

NOKIA ET AL: "NWDAF discovery update to support model sharing among trusted vendors", 3GPP DRAFT, S2-2104752, 3RD GENERATION PARTNERSHIP PROJECT (3GPP), MOBILE COMPOETENCE CENTRE; 650, ROUTE DES LUCIOLES, F-06921 SOPHIA-ANTIPOLIS CEDEC; FRANCE, vol. SA WG2, no. e-meeting; 20210517 - 20210528 10 May 2021 ("021-05-10), XP052005044 discloses methods for the discovery and selection of Machine Model providers from among a set of ML model provider vendors which are "trusted vendors".

"3rd Generation Partnership Project; Technical Specification Group Services and System Aspects; Study of Enablers for Network Automation for 5G System (5GS); Phase 3 (Release 18)", 3GPP DRAFT, S2-2104752, 3RD GENERATION PARTNERSHIP PROJECT (3GPP), MOBILE COMPOETENCE CENTRE; 650, ROUTE DES LUCIOLES, F-06921 SOPHIA-ANTIPOLIS CEDEC; FRANCE, 7 March 2022 (2022-03-07), XP052126017 provides a list of future 3GPP standardization topics.

"3rd Generation Partnership Project; Technical Specification Group Services and System Aspects; Architecture enhancements for 5G System (5GS) to support network data analytics services (Release 17)", 3GPP DRAFT, 23288-H40_CRS_IMPLEMENTED, 3RD GENERATION PARTNERSHIP PROJECT (3GPP), MOBILE COMPOETENCE CENTRE; 650, ROUTE DES LUCIOLES, F-06921 SOPHIA-ANTIPOLIS CEDEC; FRANCE, 9 March 2022 (2022-03-09), XP052127775 defines architecture enhancements for 5G Systems to support network data analytics services where such analytics services are provided by Machine Learning (ML) models being provisioned by ML model providers.

### Summary of the Invention

According to a first aspect of the present invention, an arrangement of communication network components is provided including the features of claim 1. According to a second aspect of the present invention, a method is provided including the features of claim 5. According to a third aspect of the present invention, a computer program and a computer readable medium is provided by claim 6. Additional features for advantageous embodiments of the present invention are provided in the dependent claims.

### Description of the Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system, for example configured according to 5G (Fifth Generation) as specified by 3GPP (Third Generation Partnership Project).
- Figure 2: shows a network slice.
- Figure 3: shows an NWDAF AnLF (Network Data Analytics Function Analytics Logical Function) and an NWDAF MTLF (Network Data Analytics Function Model Training Logical Function).
- Figure 4: shows a flow diagram illustrating an ML (machine learning) model provisioning service operation.
- Figure 5: shows a flow diagram illustrating an ML model request service operation.
- Figure 6: shows an exemplary scenario in which an MTLF provides machine learning (ML) models to a first AnLF and a second AnLF.
- Figure 7: shows a flow diagram for a registration of an MTLF at an NRF (Network Repository Function).
- Figure 8: shows a flow diagram for discovery of an MTLF by an NWDAF service consumer by consulting an NRF.
- Figure 9: shows an arrangement of communication network components of a mobile communication network according to an embodiment.
- Figure 10: shows a flow diagram illustrating a method for performing communication network analytics according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

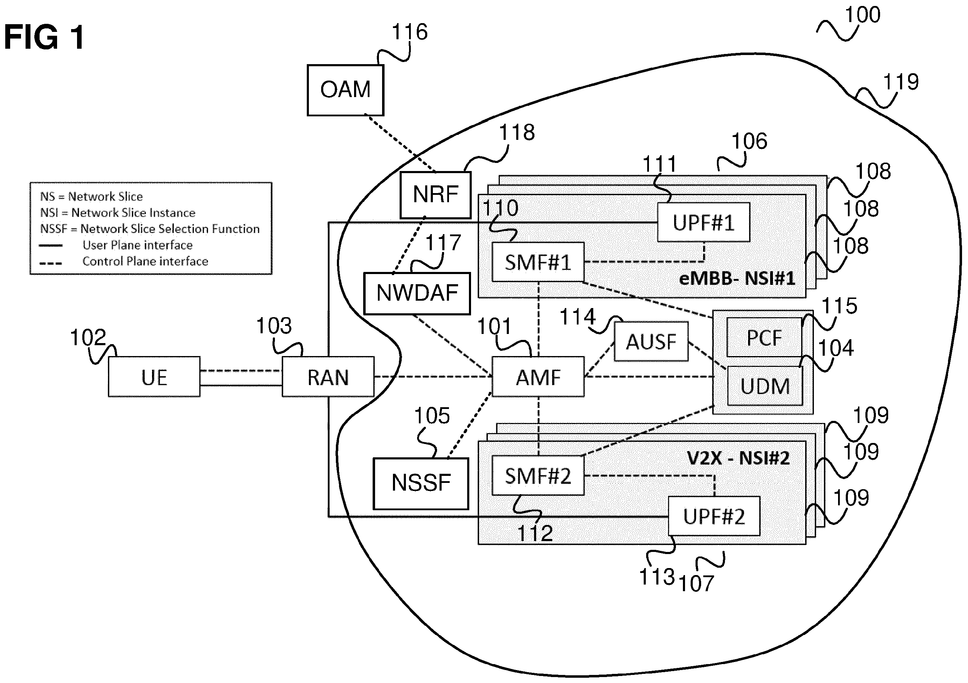

Figure 1 shows a mobile radio communication system 100, for example configured according to 5G (Fifth Generation) as specified by 3GPP (Third Generation Partnership Project).

The mobile radio communication system 100 includes a mobile radio terminal device 102 such as a UE (user equipment), a nano equipment (NE), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard (e.g. non-3GPP accesses like WiFi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 119 further includes an AUSF (Authentication Server Function) 114 and a PCF (Policy Control Function) 115.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 119 form the network side of the mobile radio communication system, or, in other words, form the mobile radio communication network. The mobile radio communication network and the mobile terminals accessing the mobile radio communication network form, together, the mobile radio communication system.

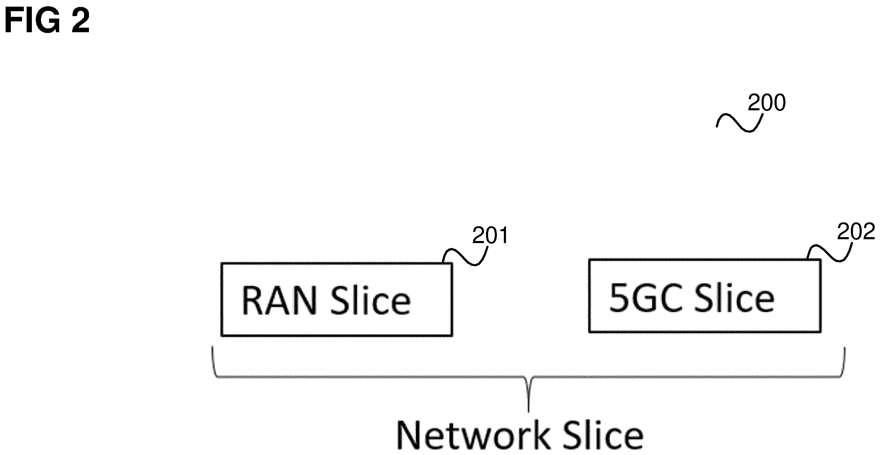

Like the core network 119, the RAN 103 may also be sliced, i.e. include multiple RAN slices. A RAN slice and a core network slice 106, 107 may be grouped to form a network slice as illustrated in figure 2.

Figure 2 shows a network slice 200.

A network slice 200 can be seen as a logical network that provides specific network capabilities and network characteristics.

The network slice 200 includes a RAN slice 201 and a core network (e.g. 5GC) slice 202.

An instance of a network slice 200, i.e. a network slice instance which includes a RAN slice instance and a core network slice instance, is defined within a PLMN and includes Core Network Control Plane and User Plane Network Functions, RAN components (e.g. NG-RAN components), in particular base stations. In case of roaming these components may at least partially be of a visited PLMN (VPLMN).

In the following, "network slice" (or just "slice") generally refers to a core network slice but may also include a RAN slice.

An S-NSSAI (Single Network Slice Selection Assistance information) identifies a network slice and consists of:
- A Slice/Service type (SST), which refers to the expected Network Slice behaviour in terms of features and services;
- A Slice Differentiator (SD) which is optional information that complements the slice/service type(s) to differentiate amongst multiple network slices of the same slice/service type.

A network slice instance is identified by an NSI (also referred to as NSI ID).

NSSAI may include one or more S-NSSAIs.

Allowed NSSAI is NSSAI provided by the serving PLMN (Public Land Mobile Network) during e.g. a registration procedure, indicating the S-NSSAI values allowed by the network for a UE in the serving PLMN for the current registration area.

Configured NSSAI is NSSAI that has been provisioned in the UE. It may be applicable to one or more PLMNs.

Requested NSSAI is NSSAI that the UE provides to the network during registration in order to establish a PDU session to the requested network slice.

The mobile radio communication system 100 may further include an OAM (Operation, Administration and Maintenance) function (or entity) 116, e.g. implemented by one or more OAM servers which is connected to the RAN 103 and the core network 119 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance.

Further, the core network 119 includes an NRF (Network Repository Function).

The core network 119 may further include a Network Data Analytics Function (NWDAF) 117. The NWDAF is responsible for providing network analysis and/or prediction information upon request from network functions. For example, a network function may request specific analysis information on the load level of a particular network slice instance. Alternatively, the network function can use the subscribe service to ensure that it is notified by the NWDAF if the load level of a network slice instance changes or reaches a specific threshold. The NWDAF 117 may have an interface to various network functions on the mobile communication network side, e.g. to the AMF 101, the SMFs 110, 112 and the PCF 115. For simplicity, only the interface between the NWDAF 117 and the AMF 101 is depicted.

For example, NWDAF analytics should allow monitoring the number of UEs registered in a network slice instance and their Observed Service Experience. In addition to OAM performing SLA (service level agreement) assurance, 5GC NFs may take actions based on NWDAF slice QoE analytics to prevent further service experience degradation in the network slice instance.

The NSSF 105 or AMF 101 may for example determine when a load distribution decision is required to address an issue identified by processing the analytics result (i.e. network analysis and/or prediction information) provided by the NWDAF 117. For example, when a network slice instance is detected or forecast to experience service experience degradation, new UE registrations or PDU sessions may not be assigned to that network slice instance anymore by triggering a network slice load distribution mechanism. The NSSF 105, AMF 101 and/or OAM 116, for example, may also simultaneously subscribe to both slice service experience and slice load analytics from the NWDAF 117. One or multiple subscriptions to one or multiple S-NSSAI(s) and NSI(s) are possible.

The NWDAF 117 provides slice load level information to an NF on a Network slice instance level. The NWDAF notifies slice specific network status analytics information (also referred to as network analysis and/or prediction information) to the NFs that are subscribed to it. For example, as network analysis and/or prediction information, the NWDAF 117 reports when the load level of the Network slice instance, indicated by the S-NSSAI and the associated NSI (if applicable) in the Analytics Filter, crosses the threshold provided in the analytics subscription; if no threshold is provided in the subscription, the reporting (Notify operation) is assumed to be periodic.

To generate the network analysis and/or prediction information, NWDAF 117 collects input data required (e.g. to derive slice service experience analytics), i.e. information for analysis of the state of the network slice instance. The NWDAF 117 may obtain such kind of information by subscribing to network functions to be informed accordingly.

According to 3GPP Release 17 (Rel-17) the NWDAF 117 is decomposed into two functions.

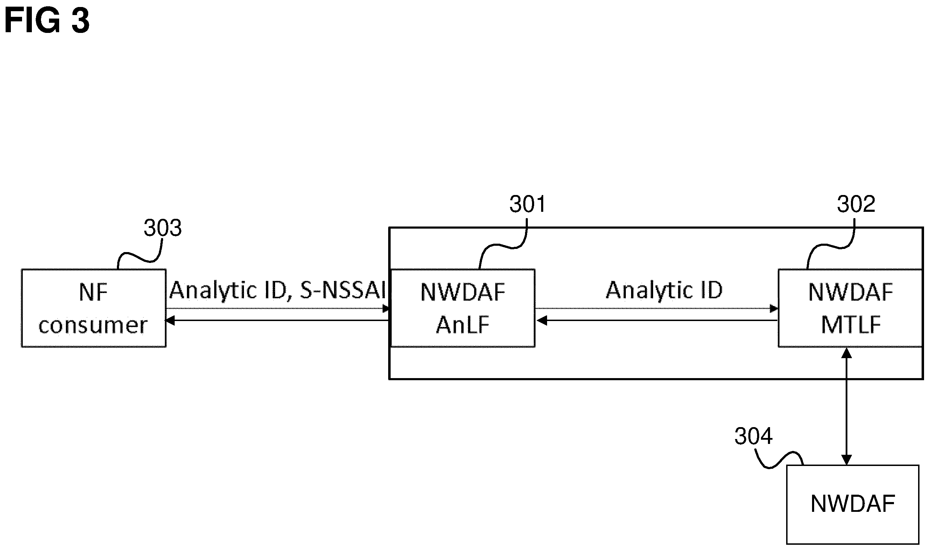

Figure 3 shows an NWDAF AnLF (Analytics Logical Function) 301 and an NWDAF MTLF (Model Training Logical Function) 302.

An NWDAF 301 containing the Analytics logical function is denoted as NWDAF(AnLF) or NWDAF-AnLF or simply AnLF and can perform inference, derive analytics information and expose analytics service i.e. Nnwdaf_AnalyticsSubscription or Nnwdaf_AnalyticsInfo.

An NWDAF 302 containing the Model Training logical function is denoted as NWDAF(MTLF) or NWDAF-MTLF or simply MTLF, trains machine learning (ML) models and exposes new training services (e.g. providing trained model).

The NWDAF(AnLF) 301 provides an analytics service. It may be contacted by an NF (acting as service consumer) 303 (e.g. an AMF or SMF) to be provided with analytics information.

Input request parameters to the NWDAF(AnLF) 301 by the NF 303 are, e.g. an Analytic ID and an S-NSSAI. The output from the NWDAF(AnLF) 301 are for example statistics and/or prediction (referred to as network analytics information herein) for an Analytic ID.

Examples of Analytics IDs are UE communication, UE mobility, UE behaviour, User data congestion and Network performance, etc.

The NWDAF(MTLF) 302 provides an ML model service (Model Training Exposure). It may be contacted by another NWDAF (acting as service consumer such as an AnLF) 304 to be provided with a trained machine learning model to perform analytics.

Table 1 lists ML model related service operations.

| **Service Name** | **Service Operations** | **Operation Semantics** |
|---|---|---|
| Nnwdaf_MLModelProvision | Subscribe | Subscribe / Notify |
| | Unsubscribe | |
| | Notify | |
| Nnwdaf_MLModelInfo | Request | Request / Response |

The Nnwdaf_MLModelProvision service and the Nnwdaf_MLModelInfo service are provided by an NWDAF(MTLF) 302 and consumed by an NWDAF 304 (which is usually an NWDAF(AnLF)).

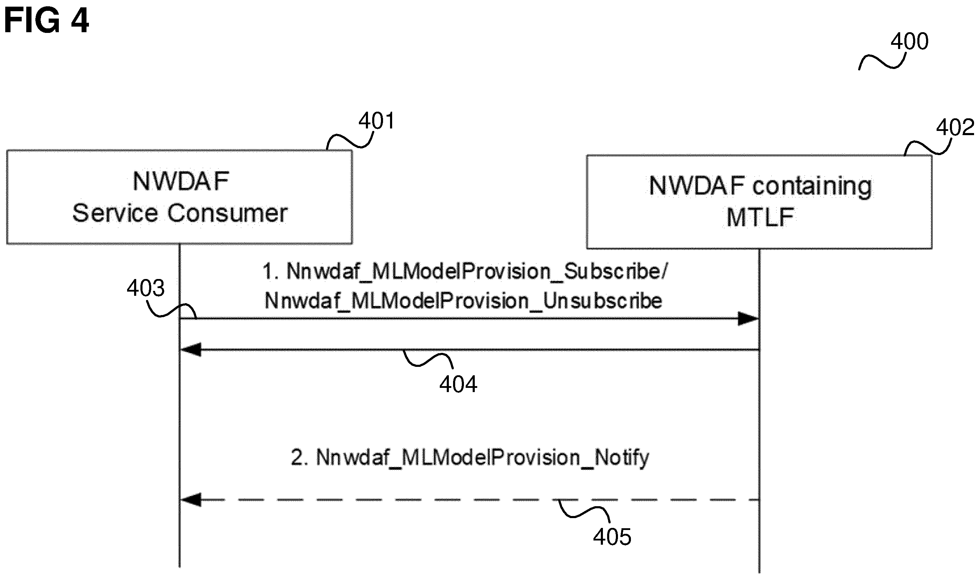

Figure 4 shows a flow diagram 400 illustrating an ML model provisioning service operation.

An NWDAF service consumer 401 (e.g. corresponding to the NWDAF 304 or AnLF 301) and an NWDAF(MTLF) 402 (e.g. corresponding to NWDAF(MTLF) 302) are involved in the flow.

The purpose of the flow of figure 4 is for the NWDAF service consumer 401 to subscribe and/or to be notified when ML model information on the related analytics becomes available.

In 403, the NWDAF service consumer 401 subscribes to the model provisioning service (it may later similarly unsubscribe). The NWDAF(MTL) 402 acknowledges in 404.

When subscribing, the NWDAF service consumer 401 may provide the following input for the NWDAF(MTLF) 402:
- A list of Analytics ID(s): identifies the analytics for which the ML model is to be used.
- Filter Information: indicates the conditions to be fulfilled for reporting Analytics Information. This enables to select which ML model for the analytics is requested.
- Target of Analytics Reporting: indicates the object(s) for which ML model for the analytics is requested, entities such as specific UEs, a group of UE(s) or any UE (i.e. all UEs).

When the NWDAF service consumer 401 has subscribed to the model provisioning service, the NWDAF(MTLF) provides as output notification correlation information and ML model information (e.g. ML model file address(es) for the Analytics ID(s)) to the NWDAF service consumer 401.

It should be noted that an NWDAF 117 can provide the analytics service or the ML model service or both services (i.e. an NWDAF 117 may be both an NWDAF(AnLF) 301 and a NWDAF(MTLF) 302).

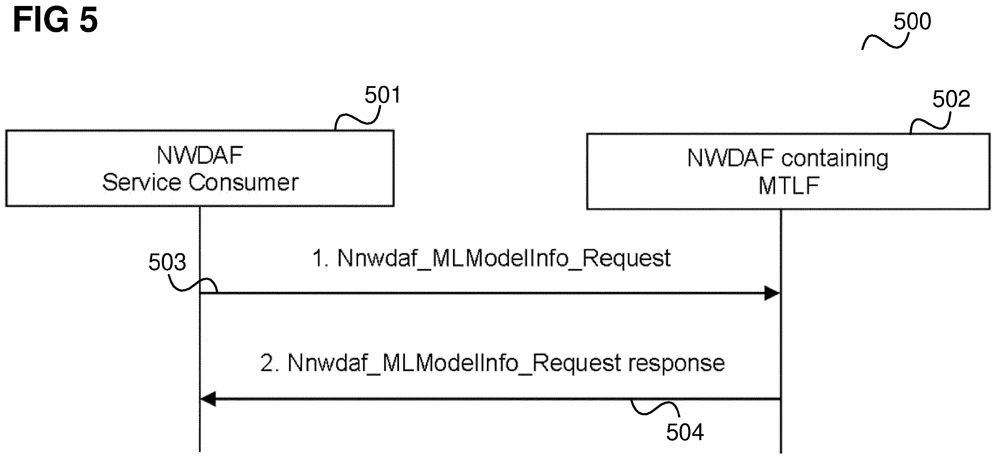

Figure 5 shows a flow diagram 500 illustrating an ML model request service operation.

An NWDAF service consumer 501 (e.g. corresponding to the NWDAF 304, e.g. an AnLF) and an NWDAF(MTLF) 502 (e.g. corresponding to NWDAF(MTLF) 302) are involved in the flow.

The purpose of the flow of figure 5 is that the NWDAF service consumer 501 is provided with (a set of) ML model(s) information associated with Analytics ID, so that the NWDAF service consumer 501 can derive analytics.

In 503, the NWDAF service consumer 501 sends a request message to the NWDAF(MTLF) 502 having similar input as in the flow of figure 4 (in particular a one or more Analytic IDs) to request NWDAF ML model information. This input optionally includes Filter information to indicate the conditions to be fulfilled for reporting Analytics Information, and Target of Analytics Reporting to indicate the object(s) for which ML model for the analytics is requested, entities such as specific UEs, a group of UE(s) or any UE (i.e. all UEs).

In 504, the NWDAF(MTLF) 502 responds with a similar output as in the flow of figure 4, i.e., one or more tuples (Analytics ID, address (e.g. URL (Uniform Resource Locator) or FQDN (Fully-Qualified Domain Name)) of Model file or Analytical Data Repository Function address/ID).

The NWDAF(MTLF) 302 may determine the machine learning model to be provided for the analytics depending on whether the ML model should be provided for analysis of specific UEs or a group of UE(s) or any UE (i.e. all UEs).

So, using the flows of FIG. 4 and FIG. 5 a service consumer (of an MTLF provision service), e.g. an AnLF, i.e. generally a network analytics component, can acquire a machine learning model (for deriving network analytics information) from a provider of the service (i.e. an MTLF).

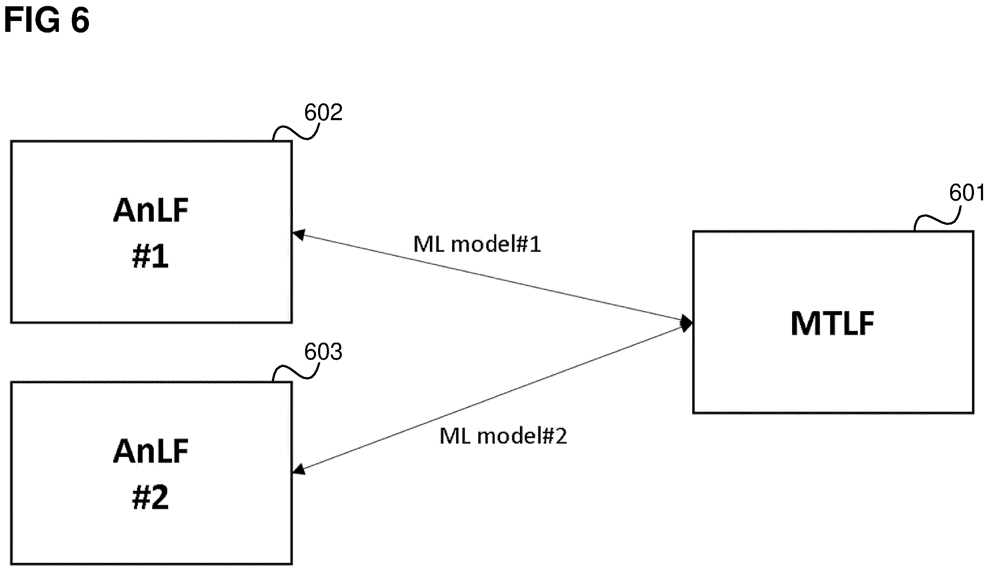

There may be multiple service consumers who request machine learning models from an MTLF, as it is illustrated in figure 6.

Figure 6 shows an exemplary scenario in which an MTLF 601 provides machine learning (ML) models (i.e. specifications of machine learning models such that they may be implemented, e.g. a specification of weights of a neural network) to a first AnLF 602 and a second AnLF 603.

The AnLFs 602 and 603 may have different requirements with respect to the ML models they require. For example, they may be from different providers (e.g. vendors or network function service provider) and thus have different functionalities. Further, the MTLF 601 and each of the AnLFs 602, 603 may be from different providers so the MTLF 601 may not have knowledge about the requirements of the AnLFs 602, 603.

According to various embodiments, approaches are described which enable sharing ML models in such a scenario, for example in a case the MTLF 601 is provided by a first provider (e.g. vendor), and the AnLFs 602, 603 are provided by a second and a third provider, respectively.

It is also possible that the MTLF 601 specifically designs an ML model for the first AnLF 602 (e.g. because the MTLF 601 and the first AnLF 602 are from the same provider). In particular in such a case, the second AnLF 603 may require an ML model which is interoperable, i.e. which can also be used by the AnLF 603 (which may be of another type than the first AnLF 602 and may have different requirements). The interoperability of the ML model, i.e. the capability to be used by different types of AnLFs, may be seen as a quality of the ML model. Accordingly, according to various embodiments, a mechanism (i.e. a functionality, e.g. provided by a certain (signalling) protocol between the respective AnLF 603 and the MTLF 601) is provided that allows the AnLF 603 to acquire an ML model from the MTLF 601 having a certain quality.

According to various embodiments, this is achieved by that the AnLF 603 sends a request message to the MTLF 601 which includes an indication of a quality requirement regarding a machine learning model and/or retrieves the ID of a ML model, e.g. from an NRF, fulfilling the quality requirement.

For example, input parameters included in the request message sent in 403 for subscription to the Nnwdaf_MLModelProvision service and input parameters included in the request message sent in 503 for requesting the Nnwdaf_MLModelInfo service (i.e. to request NWDAF ML model information) may include one or more of the following:
- an indication of a AnLF type that should be supported by the ML model (e.g. an identification of a vendor (e.g., Vendor-ID or Supported Vendor-ID AVP (Attribute value pair))
- an indication that the ML model should be interoperable
- an indication of an accuracy (i.e. accuracy of inference) of the ML model
- an indication of an efficiency of the ML model (i.e., resource cost for using the ML model).

The MTLF 601 (e.g. MTLF 402 or MTLF 502) may, in response to the request, provide the ML model and information about inference accuracy (i.e., accuracy of inference) and efficiency (i.e., resource cost for using the ML model) and/or other special treatment required for the ML model. In case the request does not directly request the ML model, the MTLF 601 (i.e. generally the machine learning model training component) may provide an identification of a suitable model (having the required quality) so that the AnLF 603 can directly request it by providing the identification of the ML model, e.g. by including the identification in the request of 403 or the request of 503. In particular, the MTLF 601 may provide multiple identification of ML models (ML IDs) and the AnLF 603 can select and request one of them by sending a corresponding requested including the identification of the selected ML model. As described further below, the AnLF 603 may also acquire an ML ID from an NRF to retrieve the corresponding ML model from an MTLF 601 by specifying the ML ID (whose MTLF ID may also be provided by the NRF).

The following refers to informative examples useful for better understanding the present invention but as such not covered by the claims.

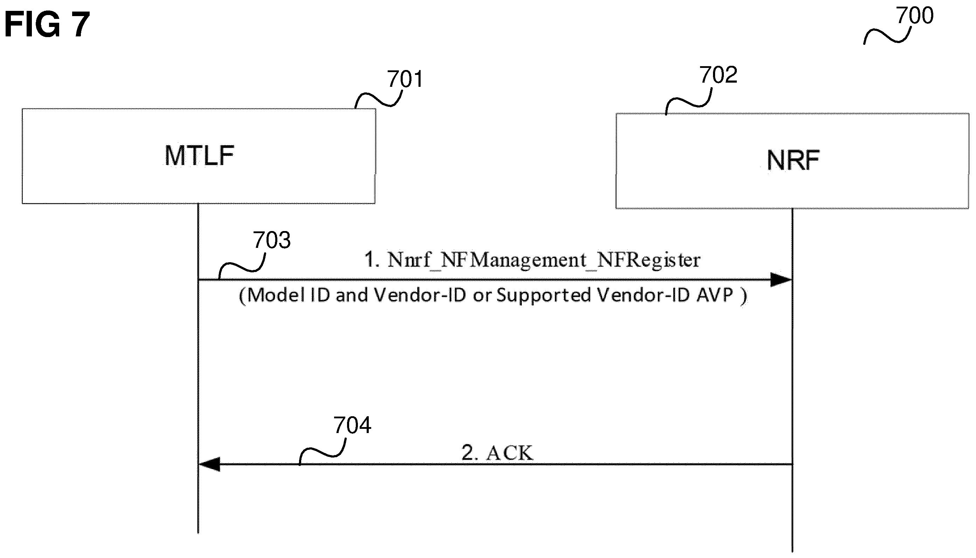

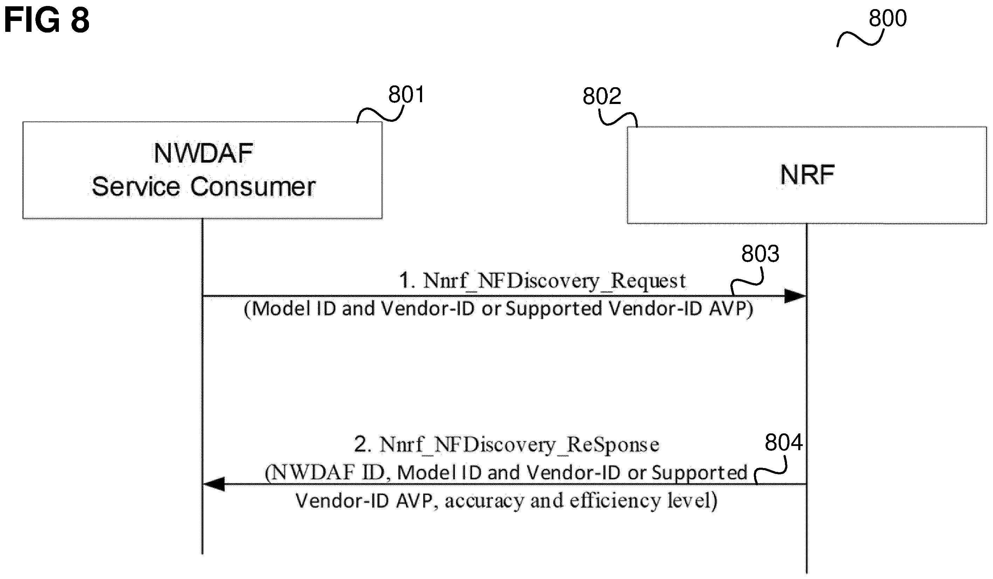

For discovery of an MTLF by a service consumer, e.g. MTLF 601 by the second AnLF 603, the MTLF registers at an NRF as illustrated in figure 7 which may then be consulted by a service consumer as illustrated in figure 8.

Figure 7 shows a flow diagram 700 for a registration of an MTLF 701 at an NRF 702.

In 703, the MTLF sends an registration request to the NRF 702 for requesting registration of the NWDAF(MTLF)'s NF profile.

The NRF 702 registers the MTLF's NF profile and acknowledges in 704.

Multiple MTLFs can register with the NRF 702 in this manner. For each MTLF, the NF profile includes one or more of the following:
- Analytic ID(s) of analytics supported
- S-NSSAI(s) of supported network slice(s)
- Indications of supported areas of interest
- Identifications of ML models it provides
- Indication of a quality of ML models provided (e.g. identifications of supported ML model types, e.g. supported vendors).
- Identification of supported interoperable ML models

It should be noted that an OAM 116 can also configure the above information in the NRF 702 and can provide the above information to the service consumer (instead of the NRF 702). For example, the OAM 116 can configure the above information in each AnLF along with one or more MTLF addresses. So in this case, the AnLF uses the local configuration, instead of checking with the NRF 702.

Figure 8 shows a flow diagram 800 for discovery of an MTLF by an NWDAF service consumer 801 by consulting an NRF 802.

In 803, the NWDAF service consumer 801 (e.g. an AnLF) sends a discovery request to the NRF 802.

In 804, the NRF 802 responds with a discovery response.

For discovering an MLTF which provides a certain machine learning model or a certain machine learning model of a certain quality, the NWDAF service consumer 801 may include, corresponding to the information included in the NF profile of the MLTF as given above, one or more of
- An Analytic ID(s) of analytics that should be supported by an ML model provided by the MLTF
- S-NSSAI(s) of network slice(s) that should be supported by an ML model provided by the MLTF
- Indications of one or more areas of interest that should be supported by an ML model provided by the MLTF
- Identification(s) of one or more ML models that should be provided by the MLTF
- Indication of a quality (or indications of multiple qualities) that should be supported by an ML model provided by the MLTF provided (e.g. identifications of supported ML model types, e.g. supported vendors)
- Identification of interoperability supporting ML models provided by the MTLF

According to the parameters included in the request of 803, the NRF 802 generates a list of (at least one) MLTFs which fulfil the request (e.g. provides the one or more identified ML models or provide one or more ML models having the indicated quality) and sends the list to the NRF 802 in the response of 804. The NRF 802 may also provide supported ML model IDs of ML models provided by the MLTFs. The NRF 802 may also include accuracy and efficiency levels of the ML models provided by the MLTFs of the list.

Based on the NRF response the service consumer 801 selects an MTLF (e.g. for requesting an ML model according to figures 4 and 5).

The description referring to informative examples ends here.

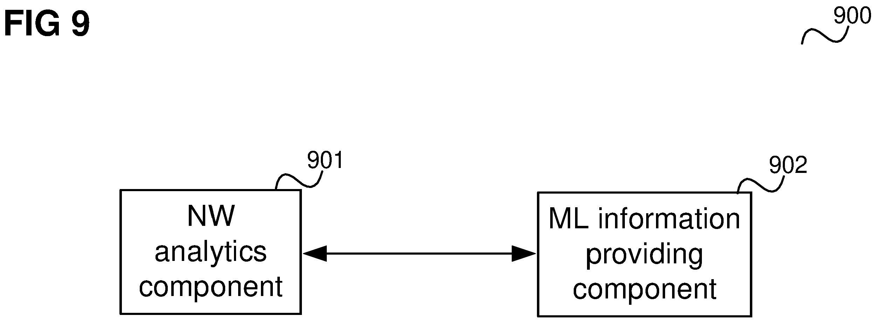

In summary, according to various embodiments, a communication network is provided as illustrated in figure 9.

Figure 9 shows an arrangement of communication network components 900 of a mobile communication network according to an embodiment.

The arrangement of communication network components 900 includes a network analytics component 901 configured to send a request for information about a machine learning model trained to derive network analytics information, wherein the request includes a specification of a quality requirement that should be fulfilled by the machine learning model.

Further, the arrangement of communication network components 900 includes an information providing component 902 configured to determine and provide the requested information to the network analytics component in response to the request.

The information providing component 902 may provide an ID of a ML model for the network analytics component 901 to retrieve the ML model from a machine learning model training component (which may also be part of the arrangement of communication network components) or the information providing component 902 may directly provide a complete specification of ML model (e.g. may itself be a machine learning model training component), i.e. a specification allowing implementation of the machine learning model by the network analytics component (e.g. values of the parameters (typically the weights) of the ML model required to implement it).

According to various embodiments, in other words, a network analytics component may request and be provided with a ML model that is suitable for it.

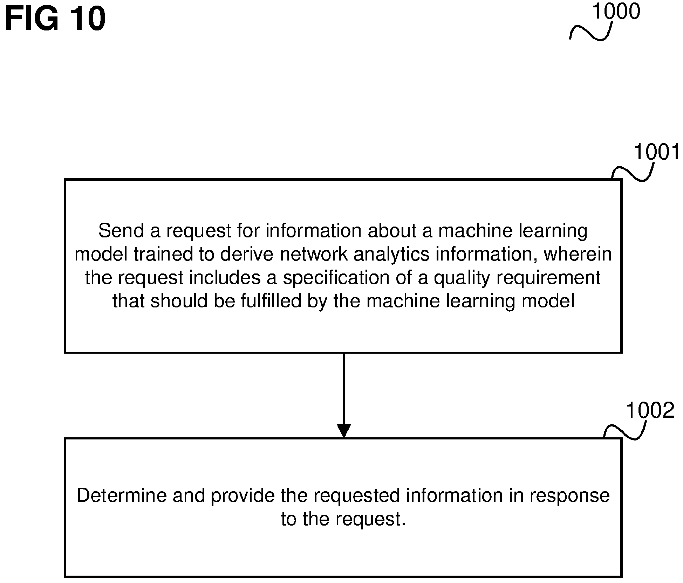

Embodiments as described above of the approach of figure 10 enable an MTLF (in general a machine learning model training component) to register itself with the capability indicating whether the ML model provided by MTLF supports a certain quality (e.g. one or more specific AnLF types.). They allow the NF consumer (in general a network analytics component) to discover the ML model that fulfils the required quality, e.g. fits the NF consumer, i.e., ML model that fits to a specific AnLF type. Based on the required quality, the MTLF can filter the model(s) that fulfil the quality (e.g. are interoperable with certain AnLF types or fits a required accuracy level) and provide it to the NF consumer.

Embodiments thus for example lock-in of deployments in which both AnLF and MTLF are from the same provider (e.g. vendor) and allow AnLF and MTLF to work in a multi-provider environment. Various embodiments introduce input and output parameters to discover and select an MTLF in a multi-provider environment, and, by introducing corresponding logic into the MTLF, to select the a ML model suitable for a consumer (e.g. an interoperable ML model) and provide it to the consumer (e.g. AnLF).

The arrangement of communication network components 900 carries out a method as illustrated in figure 10.

Figure 10 shows a flow diagram 1000 illustrating a method for performing communication network analytics according to an embodiment.

In 1001, a request for information about a machine learning model trained to derive network analytics information is sent, wherein the request includes a specification of a quality requirement that should be fulfilled by the machine learning model.

In 1002, requested information is determined and provided (to the sender of the request) in response to the request

According to embodiments of the present invention, the network analytics component may be configured to discover the machine learning model training component from repository wherein the machine learning model training component can provide machine learning models to different set of network analytics components, wherein the network analytics component is configured to request a machine learning model from the machine learning model training component, wherein the network analytics component specifies a model parameter (which may for example be a quality) for which it requests the machine learning model. The machine learning model training component may be configured to determine the network analytics component set and select a machine learning model from the plurality of machine learning models which has been trained for a model parameter according to the parameter specified in the request and to provide the determined machine learning model to the network analytics component.

The model parameter includes a model ID(s) and/or an interoperability indication (e.g., includes vendor-ID or supported vendor-ID AVP ) and/or indicates accuracy (e.g., accuracy of inference) and/or efficiency (e.g., resource cost for using the ML model).

The method may be performed and the components of the arrangement of communication network components may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

## Claims

1. An arrangement (900) of communication network components of a mobile communication network, the arrangement including:
a network analytics component (901, 801, 501) configured to send a request for information about a machine learning model trained to derive network analytics information; and
an information providing component (902, 802, 702) configured to determine and provide the requested information to the network analytics component (901, 801, 501) in response to the request;
**characterized in that**
the request for information includes a specification of a quality requirement that should be fulfilled by the machine learning model;
the information providing component (902, 802, 702, 502) is a machine learning model training component (302, 402, 502, 601, 701) and the requested information is a specification of the machine learning model allowing implementation of the machine learning model by the network analytics component (901, 801, 501); and the machine learning model training component (302, 402, 502, 601, 701) is configured to train a plurality of machine learning models for deriving network analytics information and is configured to select a machine learning model from the plurality of machine learning models which fulfils the quality requirement and provide the specification of the selected machine learning model to the network analytics component (901, 801, 501) allowing implementation of the machine learning model by the network analytics component (901, 801, 501).

2. The arrangement of claim 1, wherein the quality requirement is a required accuracy and/or a required efficiency and/or a required interoperability between a plurality of network analytics components (901, 801, 501).

3. The arrangement of claim 2, wherein the required interoperability between the plurality of network analytics components (901, 801, 501) is the requirement that the machine learning model is operable with a network analytics component (901, 801, 501) of the plurality of network analytics components (901, 801, 501), wherein the network analytics component (901, 801, 501) is provided by a different service provider than a machine learning model training component (302, 402, 502, 601, 701) service provider of a machine learning model training component (302, 402, 502, 601, 701) generating the machine learning model.

4. The arrangement of any one of claims 1 to 3, wherein the quality requirement is a support of a type of the network analytics component (901, 801, 501) of multiple network analytics component (901, 801, 501) types.

5. A method (1000) for providing a machine learning model for performing communication network analytics comprising:
sending, by a requesting network analytics component (901, 801, 501), a request for information about a machine learning model trained to derive network analytics information; and
determining and providing, by an information providing component (902, 802, 702), the requested information in response to the request;
**characterized in that**
the request for information includes a specification of a quality requirement that should be fulfilled by the machine learning model;
the information providing component (902, 802, 702, 502) is a machine learning model training component (302, 402, 502, 601, 701) and the requested information is a specification of the machine learning model allowing implementation of the machine learning model by the network analytics component (901, 801, 501); and
the machine learning model training component (302, 402, 502, 601, 701) trains a plurality of machine learning models for deriving network analytics information and selects a machine learning model from the plurality of machine learning models which fulfils the quality requirement and provides the specification of the selected machine learning model to the network analytics component (901, 801, 501) allowing implementation of the machine learning model by the network analytics component (901, 801, 501).

6. A computer program and a computer readable medium including instructions, which, when executed by a computer, make the computer perform the method of claim 5.

## Patentansprüche

1. Eine Anordnung (900) von Kommunikationsnetzwerkkomponenten eines Mobilkommunikationsnetzwerks, wobei die Anordnung aufweist:
eine Netzwerkanalysekomponente (901, 801, 501), die so konfiguriert ist, dass sie eine Anfrage nach Informationen über ein maschinelles Lernmodell sendet, das trainiert wurde, um Netzwerkanalyseinformationen abzuleiten; und
eine Informationsbereitstellungskomponente (902, 802, 702), die so konfiguriert ist, dass sie die angeforderten Informationen bestimmt und der Netzwerkanalysekomponente (901, 801, 501) als Antwort auf die Anfrage bereitstellt;
**dadurch gekennzeichnet, dass**
die Anfrage nach den Informationen eine Spezifikation einer Qualitätsanforderung enthält, die vom maschinellen Lernmodell erfüllt werden sollte;
die Informationsbereitstellungskomponente (902, 802, 702, 502) eine Komponente zum Trainieren eines maschinellen Lernmodells (302, 402, 502, 601, 701) ist und die angeforderten Informationen eine Spezifikation des maschinellen Lernmodells sind, die die Implementierung des maschinellen Lernmodells durch die Netzwerkanalysekomponente (901, 801, 501) ermöglicht; und
die Komponente zum Trainieren des maschinellen Lernmodells (302, 402, 502, 601, 701) so konfiguriert ist, dass sie eine Mehrzahl von maschinellen Lernmodellen zum Ableiten von Netzwerkanalyseinformationen trainiert, und so konfiguriert ist, dass sie aus der Mehrzahl von maschinellen Lernmodellen ein maschinelles Lernmodell auswählt, das die Qualitätsanforderung erfüllt, und die Spezifikation des ausgewählten maschinellen Lernmodells an die Netzwerkanalysekomponente (901, 801, 501) bereitstellt, wodurch die Implementierung des maschinellen Lernmodells durch die Netzwerkanalysekomponente (901, 801, 501) ermöglicht wird.

2. Die Anordnung nach Anspruch 1, wobei die Qualitätsanforderung eine erforderliche Genauigkeit und/oder eine erforderliche Effizienz und/oder eine erforderliche Interoperabilität zwischen einer Mehrzahl von Netzwerkanalysekomponenten (901, 801, 501) ist.

3. Die Anordnung nach Anspruch 2, wobei die erforderliche Interoperabilität zwischen der Mehrzahl von Netzwerkanalysekomponenten (901, 801, 501) die Anforderung ist, dass das maschinelle Lernmodell mit einer Netzwerkanalysekomponente (901, 801, 501) der Mehrzahl von Netzwerkanalysekomponenten (901, 801, 501) betreibbar ist, wobei die Netzwerkanalysekomponente (901, 801, 501) von einem anderen Dienstanbieter bereitgestellt wird als ein Dienstanbieter für eine Komponente zum Trainieren eines maschinellen Lernmodells (302, 402, 502, 601, 701), der eine Komponente zum Trainieren eines maschinellen Lernmodells (302, 402, 502, 601, 701) bereitgestellt, die das maschinelle Lernmodell generiert.

4. Die Anordnung nach irgendeinem der Ansprüche 1 bis 3, wobei die Qualitätsanforderung eine Unterstützung eines Typs der Netzwerkanalysekomponente (901, 801, 501) von mehreren Netzwerkanalysekomponententypen (901, 801, 501) ist.

5. Ein Verfahren (1000) zum Bereitstellen eines maschinellen Lernmodells zum Durchführen von Kommunikationsnetzwerkanalysen, aufweisend:
Senden einer Anfrage nach Informationen über ein maschinelles Lernmodell, das zum Ableiten von Netzwerkanalyseinformationen trainiert wurde, durch eine anfragende Netzwerkanalysekomponente (901, 801, 501); und
Bestimmen und Bereitstellen der angeforderten Informationen durch eine Informationsbereitstellungskomponente (902, 802, 702) als Antwort auf die Anfrage;
**dadurch gekennzeichnet, dass**
die Anfrage nach den Informationen eine Spezifikation einer Qualitätsanforderung enthält, die vom maschinellen Lernmodell erfüllt werden sollte;
die Informationsbereitstellungskomponente (902, 802, 702, 502) eine Komponente zum Trainieren eines maschinellen Lernmodells (302, 402, 502, 601, 701) ist und die angeforderten Informationen eine Spezifikation des maschinellen Lernmodells sind, die die Implementierung des maschinellen Lernmodells durch die Netzwerkanalysekomponente (901, 801, 501) ermöglicht; und
die Komponente zum Trainieren des maschinellen Lernmodells (302, 402, 502, 601, 701) eine Mehrzahl von maschinellen Lernmodellen zum Ableiten von Netzwerkanalyseinformationen trainiert und aus der Mehrzahl von maschinellen Lernmodellen ein maschinelles Lernmodell auswählt, das die Qualitätsanforderung erfüllt, und die Spezifikation des ausgewählten maschinellen Lernmodells der Netzwerkanalysekomponente (901, 801, 501) bereitstellt, wodurch die Implementierung des maschinellen Lernmodells durch die Netzwerkanalysekomponente (901, 801, 501) ermöglicht wird.

6. Ein Computerprogramm und ein computerlesbares Medium mit Anweisungen, die, wenn sie von einem Computer ausgeführt werden, den Computer dazu veranlassen, das Verfahren nach Anspruch 5 auszuführen.

## Revendications

1. Agencement (900) de composants de réseau de communication d'un réseau de communication mobile, l'agencement incluant :
un composant d'analyse de réseau (901, 801, 501) configuré pour envoyer une demande d'informations concernant un modèle d'apprentissage machine entraîné pour déduire des informations d'analyse de réseau ; et
un composant de fourniture d'informations (902, 802, 702) configuré pour déterminer et fournir les informations demandées au composant d'analyse de réseau (901, 801, 501) en réponse à la demande ;
**caractérisé en ce que**
la demande d'informations inclut une spécification d'une exigence de qualité qui doit être respectée par le modèle d'apprentissage machine ;
le composant de fourniture d'informations (902, 802, 702, 502) est un composant d'entraînement de modèle d'apprentissage machine (302, 402, 502, 601, 701) et les informations demandées sont une spécification du modèle d'apprentissage machine permettant la mise en œuvre du modèle d'apprentissage machine par le composant d'analyse de réseau (901, 801, 501) ; et le composant d'entraînement de modèle d'apprentissage machine (302, 402, 502, 601, 701) est configuré pour entraîner une pluralité de modèles d'apprentissage machine pour déduire des informations d'analyse de réseau et est configuré pour sélectionner un modèle d'apprentissage machine, à partir de la pluralité de modèles d'apprentissage machine, qui respecte l'exigence de qualité et fournir la spécification du modèle d'apprentissage machine sélectionné au composant d'analyse de réseau (901, 801, 501) permettant la mise en œuvre du modèle d'apprentissage machine par le composant d'analyse de réseau (901, 801, 501).

2. Agencement de la revendication 1, dans lequel l'exigence de qualité est une précision exigée et/ou un rendement exigé et/ou une interopérabilité exigée entre une pluralité de composants d'analyse de réseau (901, 801, 501).

3. Agencement de la revendication 2, dans lequel l'interopérabilité exigée entre la pluralité de composants d'analyse de réseau (901, 801, 501) est l'exigence que le modèle d'apprentissage machine est exploitable avec un composant d'analyse de réseau (901, 801, 501) de la pluralité de composants d'analyse de réseau (901, 801, 501), dans lequel le composant d'analyse de réseau (901, 801, 501) est fourni par un fournisseur de service différent d'un fournisseur de service de composant d'entraînement de modèle d'apprentissage machine (302, 402, 502, 601, 701) d'un composant d'entraînement de modèle d'apprentissage machine (302, 402, 502, 601, 701) générant le modèle d'apprentissage machine.

4. Agencement de l'une quelconque des revendications 1 à 3, dans lequel l'exigence de qualité est une prise en charge d'un type du composant d'analyse de réseau (901, 801, 501) de multiples types de composant d'analyse de réseau (901, 801, 501).

5. Procédé (1000) pour fournir un modèle d'apprentissage machine pour réaliser une analyse de réseau de communication, comprenant :
l'envoi, par un composant d'analyse de réseau (901, 801, 501) demandeur, d'une demande d'informations concernant un modèle d'apprentissage machine entraîné pour déduire des informations d'analyse de réseau ; et
la détermination et la fourniture, par un composant de fourniture d'informations (902, 802, 702), des informations demandées en réponse à la demande ; **caractérisé en ce que**
la demande d'informations inclut une spécification d'une exigence de qualité qui doit être respectée par le modèle d'apprentissage machine ;
le composant de fourniture d'informations (902, 802, 702, 502) est un composant d'entraînement de modèle d'apprentissage machine (302, 402, 502, 601, 701) et les informations demandées sont une spécification du modèle d'apprentissage machine permettant la mise en œuvre du modèle d'apprentissage machine par le composant d'analyse de réseau (901, 801, 501) ; et
le composant d'entraînement de modèle d'apprentissage machine (302, 402, 502, 601, 701) entraîne une pluralité de modèles d'apprentissage machine pour déduire des informations d'analyse de réseau et sélectionne un modèle d'apprentissage machine, à partir de la pluralité de modèles d'apprentissage machine, qui respecte l'exigence de qualité et fournit la spécification du modèle d'apprentissage machine sélectionné au composant d'analyse de réseau (901, 801, 501) permettant la mise en œuvre du modèle d'apprentissage machine par le composant d'analyse de réseau (901, 801, 501).

6. Programme d'ordinateur et support lisible par ordinateur incluant des instructions, qui, lorsqu'elles sont exécutées par un ordinateur, amènent l'ordinateur à réaliser le procédé de la revendication 5.
